# EUROPEAN PATENT SPECIFICATION

(11) **EP 4 641 972 B1**
(45) Date of publication and mention of the grant of the patent: **25.11.2026**
(21) Application number: 25172274.0
(22) Date of filing: 24.04.2025
(51) Int. Cl.: H04L 9/32, H04L 9/00

(54) **METHOD, APPARATUS, SYSTEM, AND COMPUTER PROGRAM FOR ZERO-KNOWLEDGE PROOF BASED ON BINARY TREE**
VERFAHREN, VORRICHTUNG, SYSTEM UND COMPUTERPROGRAMM FÜR ZERO-KNOWLEDGE-BEWEIS AUF DER BASIS EINES BINÄREN BAUMS
PROCÉDÉ, APPAREIL, SYSTÈME ET PROGRAMME INFORMATIQUE POUR PREUVE À CONNAISSANCE NULLE SUR LA BASE D'UN ARBRE BINAIRE

(30) Priority: 25.04.2024 KR 20240055679; 12.02.2025 KR 20250018021
(43) Date of publication of application: 29.10.2025
(73) Proprietor: Samsung SDS Co., Ltd., Seoul 05510 (KR); Korea Advanced Institute of Science and Technology, Daejeon 34141 (KR)
(72) Inventor: Kim, Seongkwang, 05510 Seoul (KR); Lee, Byeonghak, 05510 Seoul (KR); Son, Mincheol, 34141 Daejeon (KR)
(74) Representative: Grünecker Patent- und Rechtsanwälte PartG mbB

(56) References cited:
- US-A1- 20240 007 292
- DUNG BUI ET AL: "Improved All-but-One Vector Commitment with Applications to Post-Quantum Signatures", vol. 20240122:091041, 22 January 2024 (2024-01-22), pages 1 - 24, XP061084775, Retrieved from the Internet <URL:https://eprint.iacr.org/archive/2024/097/1705914641.pdf> [retrieved on 20240122]
- DUNG BUI ET AL: "Short Signatures from Regular Syndrome Decoding, Revisited", vol. 20240215:211323, 15 February 2024 (2024-02-15), pages 1 - 40, XP061085976, Retrieved from the Internet <URL:https://eprint.iacr.org/archive/2024/252/1708031603.pdf> [retrieved on 20240216]

## Description

### CROSS-REFERENCE TO RELATED APPLICATION(S)

This application is based on and claims priority under 35 U.S.C. 119 to Korean Patent Applications No. 10-2024-0055679, filed on April 25, 2024 and No. 10-2025-0018021, filed on February 12, 2025, in the Korean Intellectual Property Office.

### BACKGROUND OF THE INVENTION

### 1. Field of the invention

The disclosure relates to a method, an apparatus, a system, and a computer program for zero-knowledge proof based on a binary tree and, more specifically, to a method, an apparatus, a system, and a computer program for zero-knowledge proof based on a binary tree in which zero-knowledge proof is performed based on a binary tree configured by allocating a second child node as an XOR operation result of a parent node and a first child node, among child nodes, while injecting a secret key to a root node, thereby reducing the time and resources required for proof and effectively reducing the signature size.

### 2. Description of the Prior Art

Recently, as various online services have been provided based on wired and wireless communication networks, the importance of security is continuously increasing, and various security techniques are being applied accordingly.

In this regard, as the commercialization of quantum computing technology capable of decrypting public key cryptography such as RSA and elliptic curve cryptography is approaching, research on post-quantum cryptography (PQC) technology responding thereto is also actively being conducted.

In relation to this, the National Institute of Standards and Technology (NIST) of the United States conducted a post-quantum cryptography (PQC) standardization contest and selected one channel encryption algorithm and three digital signature algorithms, and thereafter, additional contests are being held to continuously conduct research to secure post-quantum cryptography (PQC).

More specifically, zero-knowledge proof (ZKP)-based digital signatures are considered as the main candidates for post-quantum cryptography (PQC) digital signatures. For example, the Picnic digital signature utilizing zero-knowledge proof based on MPC (Multi-Party Computation)-in-the-Head was selected as an alternate candidate in the NIST post-quantum cryptography (PQC) digital signature contest, and the FAEST digital signature utilizing zero-knowledge proof based on VOLE (Vector Oblivious Linear Evaluation)-in-the-Head was selected as a Round 2 candidate in the Additional Digital Signature Schemes.

Here, zero-knowledge proof is a method for proving that one knows the knowledge or information without revealing the same to the other parties. Zero-knowledge proof enables proof of knowledge without exposing any information other than the truth or falsity of the proposition that one wishes to prove, and may be widely used in various security fields such as post-quantum cryptography digital signature, cryptocurrency, virtual machine, and the like.

However, the existing post-quantum cryptography (PQC) electronic signature utilizing zero-knowledge proof based on MPC-in-the-Head or VOLE-in-the-Head has the advantage of ensuring security by relying only on the safety of the block cipher, whereas it has problems in which the signature size may be larger than other types of post-quantum cryptography (PQC) electronic signatures and in which the signing and verification speed may be slow.

Accordingly, there is a continuing need to improve the speed of zero-knowledge proof performed based on MPC-in-the-Head or VOLE-in-the-Head, thereby reducing the time and resources required for zero-knowledge proof, and furthermore, there is a demand for a method to effectively reduce the size of a signature generated by utilizing this, but an appropriate solution has not yet been presented.

Dung Bui et al: "Improved All-but-One Vector Commitment with Applications to Post-Quantum Signatures", IACR, International Association For Cryptologic Research vol. 20240122:091041 22 January 2024, pages 1-24, discloses techniques for constructing post-quantum digital signature schemes from zero-knowledge proof systems based on an all-but-one vector commitment scheme, which intemally uses GGM trees. More in detail, Dung Bui et al refers to constructing correlated GGM trees using an all-but-one vector commitment scheme from the half-tree technique and further generalizes it to an all-but-tau commitment scheme. In this context, Dung Bui et al also mentions constructing a left child using H(x) and a right child using H(x) ⊕ x, i.e., the right child is the XOR result of the first child and the parent.

Dung Bui et al: "Short Signatures from Regular Syndrome Decoding Revisited", IACR, International Association for Cryptologic Research vol. 20240215:211323, 15 February 2024, pages 1-40, revisits the construction of signature scheme using the MPC-in-the-head paradigm, and focuses in particular on constructions from the regular syndrome decoding assumption, a well-known variant of the syndrome decoding assumption.

US 2024/0007292 A1 discloses an example embodiment, which provides a calculating method using a zero-knowledge proof-friendly one-way function, performed by a computing device, the calculating method including: calculating a first intermediate bit stream by inputting an input bit stream of a one-way function to an augmented matrix, calculating a second intermediate bit stream by dividing the first intermediate bit stream into a predetermined number of bit streams and inputting each of the predetermined number of divided bit streams to a substitution-box (S-box), and outputting an output bit stream of the one-way function by inputting the second intermediate bit stream to a reduced matrix.

### SUMMARY OF THE INVENTION

The invention is provided as defined in the independent claims. Some preferred embodiments are described in the dependent claims.

The disclosure has been made to solve the problems of the prior art described above, and aims to provide a method, an apparatus, a system, and a computer program for zero-knowledge proof based on a binary tree, which are capable of effectively reducing the time and resources required for zero-knowledge proof by improving the speed of zero-knowledge proof performed based on MPC-in-the-Head or VOLE-in-the-Head.

In addition, the disclosure aims to provide a method, an apparatus, a system, and a computer program for zero-knowledge proof based on a binary tree, which are capable of effectively reducing the signature size of an electronic signature generated by utilizing zero-knowledge proof based on binary trees.

The technical problems to be solved in the disclosure are not limited to the technical problems mentioned above, and other technical problems not mentioned will be clearly understood by those skilled in the art to which the disclosure belongs from the description in this specification.

According to the first aspect of the present disclosure, there is provided a method for performing zero-knowledge proof using a computing apparatus, which may include: configuring, by a signatory, based on a secret key, a binary tree comprising a second child node produced based on an XOR operation result of a first child node, among child nodes located at level N+1 (where, N ≥ 1) with respect to a parent node located at level N, and the parent node; transmitting, by the signatory, to a verifier, data for verification configured based on a plurality of nodes comprising some leaf nodes, excluding one or more leaf nodes, among all leaf nodes of the binary tree; and proving that the signatory possesses the secret key, based on the transmitted data for verification.

Here, in the configuring, the first child node may be produced by applying a hash function to the parent node and a given first salt value.

In addition, in the configuring, the first child node may be produced by applying a block cipher to the parent node.

In this case, the configuring may include: producing an XOR operation result (= first operation value) of the parent node and a given 2-1st salt value; producing a first output value by applying the block cipher to the first operation value and a given 2-2nd salt value; and producing the first child node, based on an XOR operation result (= second operation value) of a second output value of a predetermined first function for the parent node and the first output value.

Furthermore, the first function may be an orthomorphism function having a characteristic in which an output value for a given input value and an XOR operation result of the input value and the output value are permutations.

In addition, in the configuring, the secret key may be injected into a root node of the binary tree.

In addition, in the configuring, the binary tree may be a GGM (Goldreich-Goldwasser-Micali) tree.

In addition, in the transmitting, the data for verification may be configured for a first leaf node that is not transmitted, among leaf nodes of the binary tree, by including another child node (= second leaf node) of a parent node (= first parent node) corresponding to the first leaf node, and another child node (= first branch node) of a parent node (= second parent node) corresponding to the first parent node therein.

Furthermore, in the transmitting, if a level of the binary tree is 3 or higher, the data for verification may be configured for a second sub-tree to which the first leaf node does not belong, among sub-trees under the root node, by further including a second branch node belonging to the second sub-tree, among child nodes of the root node, therein.

In addition, in the proving, electronic signature may be performed using zero-knowledge proof based on an MPC (Multi-Party Computation)-in-the-Head or VOLE (Vector Oblivious Linear Evaluation)-in-the-Head technique.

According to the second aspect of the present disclosure, there is provided an apparatus for performing a zero-knowledge proof, which includes a processor and a memory, and the memory may include instructions configured to cause, when executed by the processor, the apparatus to implement specific operations, and the specific operations may include: configuring, by a signatory, based on a secret key, a binary tree comprising a second child node produced based on an XOR operation result of a first child node, among child nodes located at level N+1 (where, N ≥ 1) with respect to a parent node located at level N, and the parent node; transmitting, by the signatory, to a verifier, data for verification configured based on a plurality of nodes comprising some leaf nodes, excluding one or more leaf nodes, among all leaf nodes of the binary tree; and proving that the signatory possesses the secret key, based on the transmitted data for verification.

Here, in the configuring, the first child node may be produced by applying a hash function to the parent node and a given first salt value.

In addition, the configuring may include: producing an XOR operation result (= first operation value) of the parent node and a given 2-1st salt value; producing a first output value by applying the block cipher to the first operation value and a given 2-2nd salt value; and producing the first child node, based on an XOR operation result (= second operation value) of a second output value of a predetermined first function for the parent node and the first output value.

In this case, the first function may be an orthomorphism function having a characteristic in which an output value for a given input value and an XOR operation result of the input value and the output value are permutations.

In addition, in the configuring, the secret key may be injected into a root node of the binary tree.

In addition, in the configuring, the binary tree may be a GGM (Goldreich-Goldwasser-Micali) tree.

In addition, in the transmitting, the data for verification may be configured for a first leaf node that is not transmitted, among leaf nodes of the binary tree, by including another child node (= second leaf node) of a parent node (= first parent node) corresponding to the first leaf node, and another child node (= first branch node) of a parent node (= second parent node) corresponding to the first parent node therein.

Furthermore, in the transmitting, if a level of the binary tree is 3 or higher, the data for verification may be configured for a second sub-tree to which the first leaf node does not belong, among sub-trees under the root node, by further including a second branch node belonging to the second sub-tree, among child nodes of the root node, therein.

In addition, in the proving, electronic signature may be performed using zero-knowledge proof based on an MPC (Multi-Party Computation)-in-the-Head or VOLE (Vector Oblivious Linear Evaluation)-in-the-Head technique.

According to the third aspect of the present disclosure, there is provided a computer-readable storage medium storing instructions configured to cause, when executed by a processor, an apparatus, including the processor and performing zero-knowledge proof, to implement specific operations, and the specific operations may include: configuring, by a signatory, based on a secret key, a binary tree comprising a second child node produced based on an XOR operation result of a first child node, among child nodes located at level N+1 (where, N ≥ 1) with respect to a parent node located at level N, and the parent node; transmitting, by the signatory, to a verifier, data for verification configured based on a plurality of nodes comprising some leaf nodes, excluding one or more leaf nodes, among all leaf nodes of the binary tree; and proving that the signatory possesses the secret key, based on the transmitted data for verification.

Accordingly, in a method, an apparatus, a system, and a computer program for zero-knowledge proof based on a binary tree according to an embodiment of the present disclosure, it is possible to effectively reduce the time and resources required for zero-knowledge proof by improving the speed of zero-knowledge proof performed based on MPC-in-the-Head or VOLE-in-the-Head.

In addition, in a method, an apparatus, a system, and a computer program for zero-knowledge proof based on a binary tree according to an embodiment of the present disclosure, it is possible to effectively reduce the signature size of an electronic signature generated by utilizing zero-knowledge proof based on binary trees.

The effects obtainable from the disclosure are not limited to the effects mentioned above, and other effects that are not mentioned may be clearly understood by those skilled in the art to which the disclosure belongs from the description in this specification.

### BRIEF DESCRIPTION OF THE DRAWINGS

The attached drawings are incorporated as part of the detailed description to help understanding of the disclosure and describe embodiments and technical features of the disclosure along with the detailed description.
FIG. 1 is a drawing illustrating the configuration of a zero-knowledge proof system according to an embodiment of the disclosure.
FIG. 2 is a flowchart illustrating a zero-knowledge proof method according to an embodiment of the disclosure.
FIG. 3 is a drawing illustrating a binary tree configured according to an embodiment of the disclosure.
FIGS. 4 and 5 are drawings illustrating specific algorithms for configuring a binary tree according to an embodiment of the disclosure.
FIG. 6 is a flowchart illustrating specific steps for configuring a binary tree of a zero-knowledge proof method according to an embodiment of the disclosure.
FIG. 7 is a drawing illustrating zero-knowledge proof based on MPC-in-the-Head according to an embodiment of the disclosure.
FIG. 8 is a drawing illustrating the configuration of a computing apparatus performing zero-knowledge proof according to an embodiment of the disclosure.

### DETAILED DESCRIPTION OF THE EXEMPLARY EMBODIMENTS

Hereinafter, embodiments disclosed in this specification will be described in detail with reference to the attached drawings. The purpose, specific advantages, and novel features of the disclosure will become more apparent from the following detailed description and preferred embodiments in association with the attached drawings.

Prior to the description, it should be understood that the terms used in the specification and the appended claims are intended only to described the embodiments and should not be construed to limit to disclosure, but interpreted based on the meanings and concepts corresponding to technical ideas of the disclosure on the basis of the principle that the inventor is allowed to define terms appropriately for the best explanation.

Identical or similar components will be assigned the same reference numerals, regardless of the reference numerals, and redundant descriptions thereof will be omitted. The terms "module" and "unit" used for components in the following description are assigned or used interchangeably only in consideration of the ease of drafting the specification, and do not have distinct meanings or roles in themselves, which may indicate software or hardware components.

In describing the components of the disclosure, singular expressions should be understood to encompass a plurality of components unless specifically stated otherwise. Although "first," "second," etc. are used to distinguish one component from another component, and components are not limited to these terms. In addition, the case where a component is connected to another component may indicate that another component may be connected between the two components.

In addition, when describing the embodiments disclosed in this specification, a specific description of a related known technology, which may obscure the subject matter of the embodiments disclosed in this specification, will be omitted. In addition, the attached drawings are only intended to facilitate easy understanding of the embodiments disclosed in this specification, and the technical ideas disclosed in this specification are not limited to the attached drawings, and should be understood to encompass all modifications, equivalents, or substitutes included in the scope of the disclosure.

Hereinafter, exemplary embodiments of a method, an apparatus, a system, and a computer program for zero-knowledge proof based on a binary tree according to the disclosure will be described in detail with reference to the attached drawings.

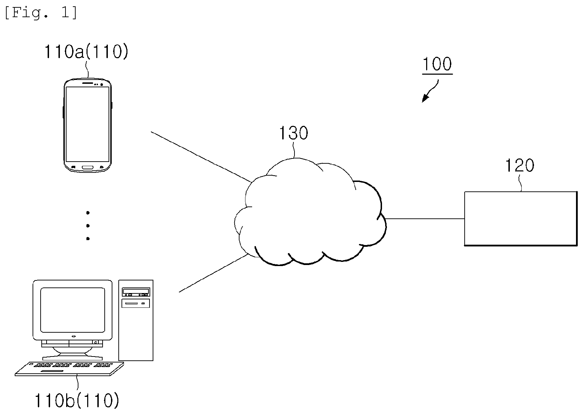

FIG. 1 illustrates the configuration and operation of a zero-knowledge proof system 100 according to an embodiment of the disclosure. As shown in FIG. 1, the zero-knowledge proof system 100 according to an embodiment of the disclosure may be configured to include one or more terminals 110 and a server 120 that is linked to the one or more terminals 110 to provide online services or the like.

In this case, the terminal 110 of the disclosure may perform zero-knowledge proof to ensure security with the server 120 or perform zero-knowledge proof to ensure security between the respective terminals 110a and 110b, and this may be further applied to security in various technical fields such as post-quantum cryptography electronic signatures, cryptocurrency, virtual machines, and block chains.

Here, various terminals capable of performing zero-knowledge proof, such as a personal computer (PC), a laptop PC, a tablet PC, a smartphone, and a PDA, may be used as the terminals 110, but the disclosure is not necessarily limited thereto, and various other devices may be used as the terminals 110.

In addition, the server 120 may be implemented using one or more physical server devices, but the disclosure is not necessarily limited thereto, and it may be configured using a cloud system or the like, or may be implemented in various forms such as a dedicated device.

In addition, a communication network 130 connecting the terminals 110 and the server 120 in FIG. 1 may include a wired network and a wireless network, and specifically, may include various communication networks such as a local area network (LAN), a metropolitan area network (MAN), and a wide area network (WAN). In addition, the communication network 130 may include the known World Wide Web (WWW). In addition, the communication network 130 may be implemented using a data bus configured to transmit and receive data or the like

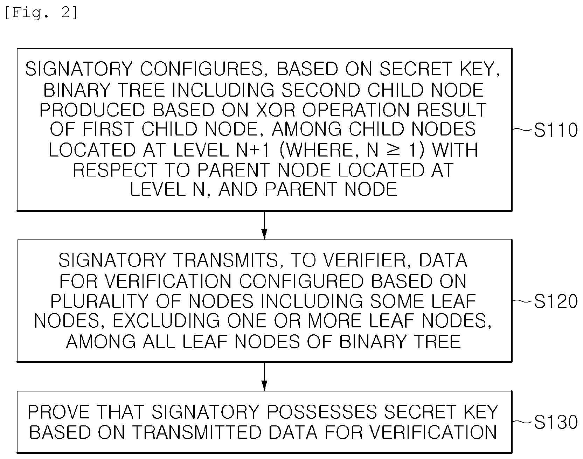

FIG. 2 illustrates a flowchart of a zero-knowledge proof method according to an embodiment of the disclosure.

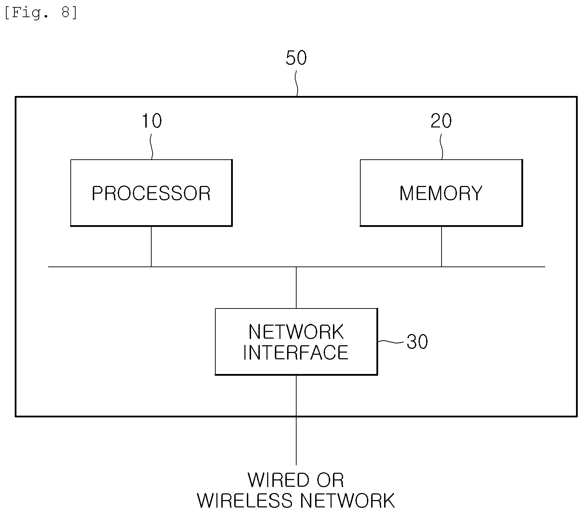

Here, the method illustrated in FIG. 2 may be performed by a zero-knowledge proof apparatus, such as a terminal 110 or server 120 in FIG. 1, and the zero-knowledge proof apparatus may be implemented using a computing apparatus 50 in FIG. 8 and description to be made later with reference to FIG. 8. For example, the zero-knowledge proof apparatus may include a processor 10, and the processor 10 may execute instructions configured to implement operations of performing zero-knowledge proof.

More specifically, as shown in FIG. 2, the zero-knowledge proof method according to an embodiment of the disclosure is a method of performing zero-knowledge proof using a computing apparatus 50, and may include a step S110 in which a signatory configures, based on a secret key, a binary tree including a second child node produced based on an XOR operation result of a first child node, among child nodes located at level N+1 (where, N ≥ 1) with respect to a parent node located at level N, and the parent node, a step S120 in which the signatory transmits, to a verifier, data for verification configured based on a plurality of nodes including some leaf nodes, excluding one or more leaf nodes, among all leaf nodes of the binary tree, and a step S130 of proving that the signatory possesses the secret key, based on the transmitted data for verification.

Here, in the step S110 of configuring, the first child node may be produced by applying a hash function to the parent node and a given first salt value.

In addition, in the step S110 of configuring, the first child node may be produced by applying a block cipher to the parent node.

In this case, the step S110 of configuring may include a step S111 of producing an XOR operation result (= first operation value) of the parent node and a given 2-1st salt value, a step S112 of producing a first output value by applying a block cipher to the first operation value and a given 2-2nd salt value, and a step S113 of producing the first child node, based on an XOR operation result (= second operation value) of a second output value of a predetermined first function for the parent node and the first output value.

Furthermore, the first function may be an orthomorphism function having the characteristic in which both an output value for a given input value and an XOR operation result of the input value and the output value are permutations.

In addition, in the step S110 of configuring, the secret key may be injected to the root node of the binary tree.

In addition, in the step S110 of configuring, the binary tree may be a GGM (Goldreich-Goldwasser-Micali) tree.

In addition, in the step S120 of transmitting, the data for verification may be configured for a first leaf node that is not transmitted, among the leaf nodes of the binary tree, by including another child node (= second leaf node) of a parent node (= first parent node) corresponding to the first leaf node, and another child node (= first branch node) of a parent node (= second parent node) corresponding to the first parent node therein.

Furthermore, in the step S120 of transmitting, if the level of the binary tree is 3 or higher, the data for verification may be configured for a second sub-tree to which the first leaf node does not belong, among the sub-trees under the root node, by further including a second branch node belonging to the second sub-tree, among the child nodes of the root node, therein.

In addition, in the step S130 of proving, electronic signature may be performed by utilizing a zero-knowledge proof based on an MPC (Multi-Party Computation)-in-the-Head or VOLE (Vector Oblivious Linear Evaluation)-in-the-Head technique.

Accordingly, in a method, an apparatus, a system, and a computer program for zero-knowledge proof based on a binary tree according to an embodiment of the present disclosure, it is possible to effectively reduce the time and resources required for zero-knowledge proof by improving the speed of zero-knowledge proof performed based on MPC-in-the-Head or VOLE-in-the-Head, and to effectively reduce the signature size of an electronic signature generated by utilizing zero-knowledge proof based on binary trees.

Hereinafter, the configuration and operation of a method, an apparatus, a system, and a computer program for zero-knowledge proof based on a binary tree according to an embodiment of the present disclosure will be described in more detail with reference to the drawings.

First, in step S110, a signatory (prover) 210, such as a terminal 110 or server 120, who wishes to perform zero-knowledge proof configures, based on a secret key, a binary tree including a second child node produced based on an XOR operation result of a first child node, among child nodes located at level N+1 (where, N ≥ 1, and N is a natural number greater than or equal to 1) with respect to a parent node located at level N, and the parent node.

Here, in step S110, the binary tree may be a GGM (Goldreich-Goldwasser-Micali) tree.

In this case, the signatory 210 may inject the secret key into a root node of the binary tree and, based on this, configure the binary tree.

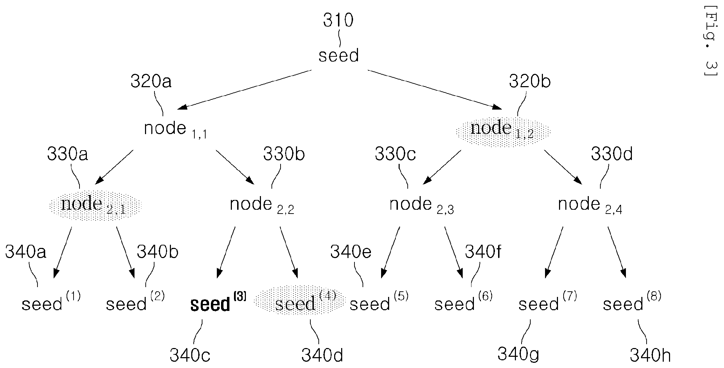

As a more specific example, referring to FIG. 3, in step S110, the signatory 210 may inject a secret key, among a pre-generated secret key and public key, into a root node 310 of the binary tree, and then configure a binary tree, based on the root node 310.

Subsequently, the signatory 210 may produce a first child node 320a and a second child node 320b of a second level using the root node 310 of a first level as a parent node.

In this case, in the disclosure, the first child node 320a may be produced by applying a hash function or block cipher to the root node 310, and the second child node 320b may be produced based on an XOR operation result of the first child node 320a and the root node 310.

As a more specific example, if the secret key is a 128-bit bit string SK, the root node 310 may be assigned the bit string SK, and the first child node 320a may be assigned a 128-bit bit string CN1 produced by applying a predetermined hash function Hₜᵣₑₑ to the bit string SK, and the second child node 320b may be assigned a 128-bit bit string CN2, which is the XOR operation result of the CN1 and the SK.

Next, the signatory 210 may produce a third child node 330a and a fourth child node 330b of a third level using the first child node 320a of the second level as a parent node.

In this case, similarly to the root node 310, the third child node 330a may be produced by applying a hash function or block cipher to the first child node 320a, and the fourth child node 330b may be produced based on the XOR operation result of the third child node 330a and the first child node 320a.

Furthermore, the signatory 210 may produce a fifth child node 340a and a sixth child node 340b of a fourth level using the third child node 330a of the third level as a parent node.

In this case, like the root node 310, the fifth child node 340a may be produced by applying a hash function or block cipher to the third child node 330a, and the sixth child node 340b may be produced based on an XOR operation result of the fifth child node 340a and the third child node 330a.

As described above, as shown in FIG. 3, the signatory 210 may configure a binary tree such as a GGM tree, based on the secret key, and, based on this, may perform zero-knowledge proof or process electronic signatures.

Accordingly, in the binary tree-based zero-knowledge proof method according to an embodiment of the disclosure, the speed of zero-knowledge proof may be improved, thereby reducing the time and resources required, and, based on this, the signature size of the electronic signature generated may be effectively reduced.

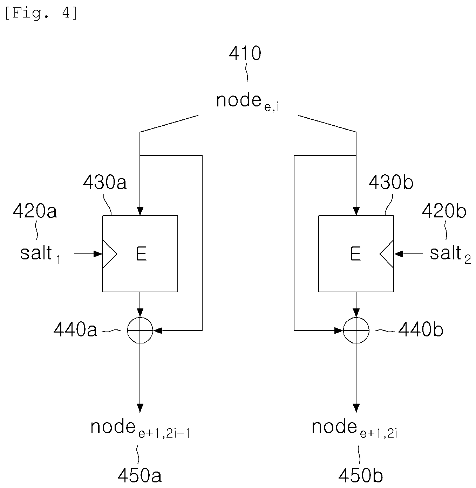

As a more specific example, when applying a hash function or block cipher to a parent node 410 to produce a first child node 450a and a second child node 450b, thereby configuring a binary tree, as shown in FIG. 4, the hash function or the block cipher must be applied twice to produce the respective child nodes, which may increase the time and resources required for zero-knowledge proof. However, in the disclosure, the hash function or the block cipher is applied only to the first child node 450a, and the second child node 450b is produced based on the XOR operation result of the parent node 410 and the first child node 450a, so it is possible to process the operation quickly with fewer resources.

In addition, in the case where a binary tree is configured by injecting a randomly generated bit string or the like, instead of the secret key as in the disclosure, and electronic signature is performed based on this, since a random value is generated when generating a secret key share value, a compensation value must be further included in the signature to correct this, which may cause a problem of an increase in the size of the signature. However, in the disclosure, a secret key is injected into the root node 310 to configure a binary tree, so a separate compensation value does not need to be added to the signature, thereby effectively reducing the signature size.

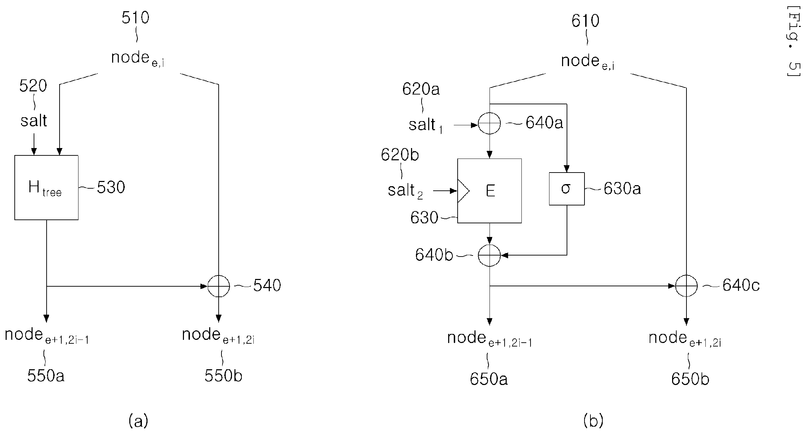

As a more specific example, FIG. 5 illustrates a case where a binary tree is configured using a hash function ((a) in FIG. 5) and a case where a binary tree is configured using a block cipher ((b) in FIG. 5).

In this case, as shown in (a) of FIG. 5, in step S110, the signatory 210 may apply a hash function 530 to a parent node 510 and a given first salt value 520 to produce a first child node 550a, and then assign the XOR operation result of the first child node 550a and the parent node 510 to a second child node 550b.

In addition, when configuring a binary tree using a block cipher, as shown in (b) of FIG. 5, the signatory 210 may apply a block cipher 630 and a first function 630a, which is an orthomorphism function, to a parent node 610 and a given 2-1st salt value 620a and a 2-2nd salt value 620b to produce a first child node 650a, and then assign the XOR operation result of the first child node 650a and the parent node 610 to a second child node 650b.

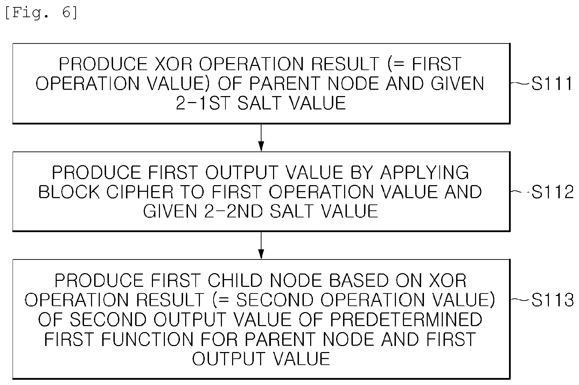

More specifically, when configuring a binary tree using a block cipher, the step S110 may include, as shown in FIG. 6, a step S111 of producing an XOR operation result 640a (= first operation value) of the parent node 610 and the given 2-1st salt value 620a, a step S112 of producing a first output value by applying the block cipher 630 to the first operation value and the given 2-2nd salt value 620b, and a step S113 of producing the first child node 650a, based on an XOR operation result 640b(= second operation value) of a second output value of a predetermined first function 630a for the parent node 610 and the first output value.

In this case, the first function (σ) 630a may be an orthomorphism function having the characteristic in which the output value (σ(x)) for a given input value (x) and the XOR operation result (σ(x)⊕x) of the output value and the input value are both permutations.

For example, both σ(L∥R) = R∥L ⊕ *R* and σ(x) ⊕ x = (R ⊕ L∥L) may correspond to the orthomorphism function, as permutations.

Accordingly, in the step S120, the signatory 210 may transmit, to a verifier 220, data for verification configured based on a plurality of nodes including some leaf nodes, excluding one or more leaf nodes, among all leaf nodes of the binary tree.

In this case, the data for verification may be data for zero-knowledge proof or a signature for electronic signature, but the disclosure is not necessarily limited thereto.

More specifically, the signatory 210 may configure the data for verification for a first leaf node that is not transmitted, among the leaf nodes of the binary tree, by including another child node (= second leaf node) of a parent node (= first parent node) corresponding to the first leaf node, and another child node (= first branch node) of a parent node (= second parent node) corresponding to the first parent node therein, and then transmit the same to the verifier 220.

Furthermore, if the level of the binary tree is 3 or higher, the signatory 210 may configure the data for verification for a second sub-tree to which the first leaf node does not belong, among the sub-trees under the root node, by further including a second branch node belonging to the second sub-tree, among the child nodes of the root node, therein, and then transmit the same to the verifier 220.

As a more specific example, referring to FIG. 3, the signatory 210 may configure the data for verification for a first leaf node 340c that is not transmitted, among the leaf nodes 340a to 340h of the binary tree, by including another child node (= second leaf node) 340d of a first parent node 330b corresponding to the first leaf node 340c, and another child node (= first branch node) 330a of a second parent node 320a corresponding to the first parent node 330b therein (i.e., the data for verification includes the second leaf node 340d and the first branch node 330a).

In addition, referring to FIG. 3, if the level of the binary tree is 3 or higher, the signatory 210 may configure the data for verification for a second sub-tree to which the first leaf node 340c does not belong, among the sub-trees under the root node 310, by further including a second branch node 320b belonging to the second sub-tree therein, among the child nodes of the root node 310 (i.e., the data for verification includes the second leaf node 340d, the first branch node 330a, and the second branch node 320b).

Accordingly, the verifier 220 may produces seed 1 (340a) and seed 2 (340b), based on the first branch node 330a, and produce seed 5 (340e) to seed 8 (340h), based on the second branch node 320b, thereby eventually securing all of the remaining leaf nodes 340a, 340b, and 340d to 340h, excluding the first leaf node 340c that is not to be transmitted.

Subsequently, in the step S130, it may be proved that the signatory 210 possesses the secret key, based on the transmitted data for verification.

Based on this, the signatory 210 may perform electronic signature utilizing zero-knowledge proof based on the MPC (Multi-Party Computation)-in-the-Head or VOLE (Vector Oblivious Linear Evaluation)-in-the-Head technique.

As a more specific example, although an example of performing electronic signature utilizing zero-knowledge proof based on MPC-in-the-Head will be described as an embodiment of the disclosure, the disclosure is not necessarily limited thereto, and the disclosure may be utilized in various cases where zero-knowledge proof is performed based on binary trees.

More specifically, electronic signature based on zero-knowledge proof may be configured to include three elements below.
(element 1) Zero-knowledge proof-friendly block cipher
(element 2) Zero-knowledge proof based on MPC-in-the-Head
(element 3) Fiat-Shamir transformation that converts interactive zero-knowledge proof to non-interactive

In this case, the block cipher may be configured as encryption (E) and decryption (D) algorithms, and encryption (E) may input message M and secret key K and output ciphertext **C = E_{K}(M),** and decryption (D) may input ciphertext C and secret key K and output message **M'** = **D_{K}(C).**

In addition, the zero-knowledge proof may be configured as **ZK.Prove** and **ZK.Verify** algorithms for a set L, and **ZK.Prove** may receive a public input value **x,** a secret value **w**, and a Nonce value **nc,** and output a proof value **π** = **ZK.Prove((x, w);nc)** that proves **(x, w) ∈ L,** and **ZK.Verify** may receive the proof value **π** and the public input value **x** and output 0 (reject) or 1 (accept) through verification, and in this case, the proof value must not reveal information about the secret value.

Furthermore, electronic signature based on zero-knowledge proof may be configured as three algorithms (KeyGen, Sign, Verify) for the following Equation 1. [Equation 1] $L = \left\{\left(x=\left(M,{E}_{K}\left(M\right)\right),w=K\right):M,K←{\left\{0, 1\right\}}^{λ}\right\}$

(Algorithm 1) **KeyGen(1^{λ})** → **(*pk, sk*):** Sampling a random message **M** and a block cipher secret key **K** for a security parameter **λ** and outputting a public key **pk = (M, C** = **E_{K}(*M*))** and a secret key **sk** = **K** for them.

(Algorithm 2) **Sign(sk, m)** → **σ:** Receiving input of the secret key **sk = K** and the message **M** and outputting a proof value **σ** = **π** ← **ZK.Prove((*pk*, *sk*); *m*)** using **M** as a Nonce value.

(Algorithm 3) **Verify(pk, σ)** → **0 or 1 :** Receiving input of the public key **pk** = **(M,** C = **E_{K}(*M*))** and a signature value **σ** = **π** and outputting **0 or 1** ← **ZK.Verify(pk, *π*)** indicating whether or not the verification has passed.

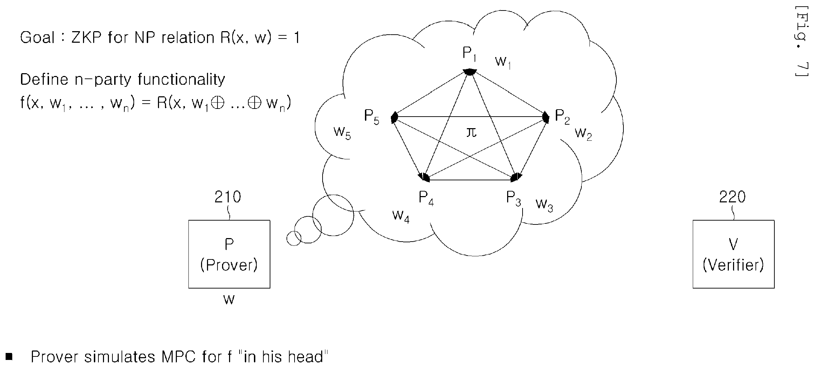

Regarding this, zero-knowledge proof in MPC-in-the-Head, as shown in FIG. 7, the signatory (prover) 210 distributes **wᵢ,** which is the i-th share value of secret values **w,** to N virtual parties in his head, simulates multi-party computation (MPC) for a given circuit, and then discloses information including the secret seed value to some random parties, thereby proving **(x, w) ∈ L.**

Furthermore, since performing multi-party computation once may not be sufficient to prevent an attack for manipulating the proof while the signatory 210 does not possess the secret value with a malicious intention, it is also possible to respond by performing the multi-party computation several times in parallel.

In addition, the GGM (Goldreich-Goldwasser-Micali) tree may have a structure for generating a group of pseudo-random number functions (PRFs) using a double-length pseudo-random number generator (double-length PRG), and the GGM tree may be widely used in various cryptographic applications such as correlated random number transmission, electronic signature, and private set intersection.

In this case, as illustrated in FIG. 3, in the disclosure, the double-length pseudo-random number generator (double-length PRG) may be applied to two arrows going down from the top of the binary tree to generate the respective nodes, and the **seed⁽ⁱ⁾** at each terminal node may be a pseudo-random function value.

In addition, in the zero-knowledge proof method according to an embodiment of the disclosure, the leaf nodes of the GGM tree, excluding one leaf node value, may be transmitted to the verifier 220, and the verifier 220 may produce the remaining leaf node values using a pseudo-random number generator (PRG) (for example, if seed 3 (340c) in FIG. 3 is excluded, node_{2,1} (330a), seed 4 (340d), and node_{1,2} (320b) may be transmitted to the verifier 220).

Accordingly, in the zero-knowledge proof method based on MPC-in-the-Head, the GGM tree may be used to generate a shared value between N virtual parties, and in this case, each leaf node may become the seed of each party, and random shared values may be generated through the seed, and in this case, the number of random seeds disclosed at the time of signing may be reduced from N-1 to log N, thereby reducing the signature size.

However, as previously described, in the case of configuring a binary tree by injecting randomly generated bit strings and performing zero-knowledge proof based on this, it is necessary to correct a difference from the actual secret key after generating a shared value, based on the seed of each party, and this leads to the problem in which an additional compensation value is required to ensure that the sum of the random values becomes a specific value (secret key) when the shared values are randomly generated.

On the other hand, in the zero-knowledge proof based on a binary tree according to an embodiment of the disclosure, it is possible to perform zero-knowledge proof without further generating the compensation value by injecting a secret key into the root node and configuring a binary tree based on this.

Furthermore, in the binary tree-based zero-knowledge proof method according to an embodiment of the disclosure, even if a hash function or a block cipher is used as a pseudo-random number generator (PRG), a salt value, which is a public random value not to be vulnerable to multi-instance attacks, may be further input to implement a binary tree-based zero-knowledge proof method capable of fast calculation, thereby providing a zero-knowledge proof method that is secure while improving the signature size.

Hereinafter, a specific embodiment of the binary tree-based zero-knowledge proof method according to an embodiment of the disclosure will be described using the following parameters.
(Parameter 1) ***λ*:** Bit string length of each node/leaf
(Parameter 2) **N:** Number of virtual parties (power-of-two)
(Parameter 3) **d:** Depth of GGM tree (i.e., ***d* = log₂*N*)**

In addition, an embodiment of the zero-knowledge proof method will be described below, based on a GGM tree having the following elements.
(Element 1) ***H**_{**t**r}****ₑₑ*:** A cryptographic hash function that takes a bit string of arbitrary length as input and outputs a **λ - bit** bit string as output
(Element 2) Secure block cipher **E: {0, 1}^{λ}** × **{0, 1}*^{λ}*** → **{0, 1}*^{λ}***
(Element 3) Orthomorphism **σ:{0, 1}^{λ} → {0, 1}^{λ}** (Here, orthomorphism indicates **σ** when both **σ(x)** and **σ(x) ⊕ x** are permutations)
(Element 4) Salt value **salt = (salt₁, salt₂) ∈ {0, 1}^{λ+λ}**

In this case, an example of a case (= Case 1) according to an embodiment of the disclosure in which a GGM tree is configured and in which a hash function is applied to perform zero-knowledge proof is as follows.

(Step 1) A secret key **sk** and a public key **pk** are generated through a key generation algorithm (KeyGen). In this case, **sk** may be a **λ - bit** bit string, but the disclosure is not limited to this, and it is also possible to implement it through various modifications, such as using the **λ** bits in the front of **sk.** [Equation 2] $KeyGen \left({1}^{λ}\right) = \left(sk, pk\right)$

(Step 2) The value of Equation 3 below is calculated using **sk** as input. [Equation 3] $\begin{matrix}{node}_{1,1} = {H}_{tree} \left(salt\left‖sk\right.\right) \\ {node}_{1,2} = sk ⊕ {node}_{1,1}\end{matrix}$

(Step 3) Repeat Step 2 for **e = 1, ... , d - 1** [Equation 4] $\begin{matrix}{node}_{e + 1,2 i - 1} = {H}_{tree} \left(salt\left‖{node}_{e , i}\right.\right) \\ {node}_{e + 1,2 i} = {node}_{e + 1,2 i - 1} ⊕ {node}_{e , i}\end{matrix}$

In this case, the range **i** of for each **e** is **1, ... , 2^{e}.**

(Step 4) Leaf node **seedᵢ = *node_{d,i}* (i = 1, ... , N)** is input to the pseudo-random number generator (PRG) to generate the remaining shared values.

In addition, referring to the case (= Case 2) where a GGM tree is configured and a block function is applied to perform zero-knowledge proof according to an embodiment of the disclosure, based on the above Case 1, Equation 3 in step 2 and Equation 4 in step 3 of Case 1 are changed to Equations 5 and 6, respectively, as follows and then applied. [Equation 5] $\begin{matrix}{node}_{1,1} = {E}_{sal {t}_{2}} \left({salt}_{1}⊕sk\right) ⊕ σ \left(sk\right) \\ {node}_{1,2} = sk ⊕ {node}_{1,1}\end{matrix}$ [Equation 6] $\begin{matrix}{node}_{e + 1,2 i - 1} = {E}_{sal {t}_{2}} \left({salt}_{1}⊕{node}_{e , i}\right) ⊕ σ \left({node}_{e , i}\right) \\ {node}_{e + 1 , 2 i} = {node}_{e + 1 , 2 i - 1} ⊕ {node}_{e , i}\end{matrix}$

In this case, it is desirable to set the parameter λ and N so as to ensure security while minimizing the signature size, and more specifically, (λ ≥ 128) may be used for security.

For example, λ may be set to n bits when the same security as AES-n is desired for security, and N is a parameter related to the signature size-signature speed trade-off, and may be set to a power of 2, which is greater than 3 (e.g., 16, 256, 2048, or the like).

As a more specific example, in the case of Example 1 (SHAKE-based construction), the elements of the GGM tree may be defined as follows.
(Element 1-1) Configure the front λ bits of the SHAKE output, which is an extendable output function version of the American standard hash function SHA3, to Hₜᵣₑₑ
(Element 1-2) Block cipher and orthomorphism are not used

In addition, in the case of Example 2 (AES-based construction), the elements of the GGM tree may be defined as follows.
(Element 2-1) AES-128 is used as block cipher E
(Element 2-2) Orthomorphism is defined as follows:
   σ(x) = 2 · x (where, multiplication is a product on the Galois field)

Accordingly, in a method, an apparatus, a system, and a computer program for zero-knowledge proof based on a binary tree according to an embodiment of the present disclosure, it is possible to effectively reduce the time and resources required for zero-knowledge proof by improving the speed of zero-knowledge proof performed based on MPC-in-the-Head or VOLE-in-the-Head, and to effectively reduce the signature size of an electronic signature generated by utilizing zero-knowledge proof based on binary trees.

In addition, the computer program according to another aspect of the disclosure is stored on a computer-readable medium in order to execute a series of steps of the binary tree-based zero-knowledge proof method described above in a computer. The computer program may be not only a computer program including machine language codes created by a compiler, but also a computer program including high-level language codes executable in a computer using an interpreter or the like. In this case, the computer includes, in addition to a personal computer (PC) or a laptop computer, any type of information processing device equipped with a central processing unit (CPU) to execute a computer program, such as a server, a smartphone, a tablet PC, a PDA, or a mobile phone.

In addition, the computer-readable medium may be a medium that continuously stores a computer-executable program, or temporarily stores it for execution or download. In addition, the medium may be a variety of recording means or storage means in the form of a single piece of hardware or a combination of multiple pieces of hardware, and may not be limited to a medium directly connected to a computer system, but may also be distributed on a network. Therefore, the above detailed description should not be construed as limiting the disclosure in all respects and should be considered as examples. The scope of the disclosure should be determined by a reasonable interpretation of the appended claims, and all changes within the equivalent scope of the disclosure are included in the scope of the disclosure.

In addition, the binary tree-based zero-knowledge proof apparatus according to an embodiment of the disclosure is an apparatus for performing zero-knowledge proof, and may include a processor; and a memory, wherein the memory may include instructions configured to cause, when executed by the processor, the apparatus to implement specific operations, and the specific operations may include: configuring, by a signatory, based on a secret key, a binary tree comprising a second child node produced based on an XOR operation result of a first child node, among child nodes located at level N+1 (where, N ≥ 1) with respect to a parent node located at level N, and the parent node; transmitting, by the signatory, to a verifier, data for verification configured based on a plurality of nodes comprising some leaf nodes, excluding one or more leaf nodes, among all leaf nodes of the binary tree; and proving that the signatory possesses the secret key, based on the transmitted data for verification.

Here, in the configuring, the first child node may be produced by applying a hash function to the parent node and a given first salt value.

In addition, the configuring may include: producing an XOR operation result (= first operation value) of the parent node and a given 2-1st salt value; producing a first output value by applying the block cipher to the first operation value and a given 2-2nd salt value; and producing the first child node, based on an XOR operation result (= second operation value) of a second output value of a predetermined first function for the parent node and the first output value.

In this case, the first function may be an orthomorphism function having a characteristic in which an output value for a given input value and an XOR operation result of the input value and the output value are permutations.

In addition, in the configuring, the secret key may be injected into a root node of the binary tree.

In addition, in the configuring, the binary tree may be a GGM (Goldreich-Goldwasser-Micali) tree.

In addition, in the transmitting, the data for verification may be configured for a first leaf node that is not transmitted, among leaf nodes of the binary tree, by including another child node (= second leaf node) of a parent node (= first parent node) corresponding to the first leaf node, and another child node (= first branch node) of a parent node (= second parent node) corresponding to the first parent node therein.

Furthermore, in the transmitting, if a level of the binary tree is 3 or higher, the data for verification may be configured for a second sub-tree to which the first leaf node does not belong, among sub-trees under the root node, by further including a second branch node belonging to the second sub-tree, among child nodes of the root node, therein.

In addition, in the proving, electronic signature may be performed using zero-knowledge proof based on an MPC (Multi-Party Computation)-in-the-Head or VOLE (Vector Oblivious Linear Evaluation)-in-the-Head technique.

In addition, FIG. 8 illustrates an apparatus 50 to which the proposed method of the disclosure may be applied.

Referring to FIG. 8, the apparatus 50 may be configured to implement a binary tree-based zero-knowledge proof process according to the proposed method of the disclosure.

For example, the apparatus 50 to which the proposed method of the disclosure may be applied may include network devices such as repeaters, hubs, bridges, switches, routers, gateways, and the like, computer devices such as desktop computers, workstations, and the like, mobile terminals such as smartphones and the like, portable devices such as laptop computers and the like, home appliances such as digital TVs and the like, and moving means such as vehicles and the like. As another example, the apparatus 50 to which the disclosure may be applied may be included as part of an ASIC (Application Specific Integrated Circuit) implemented in the form of an SoC System-on-Chip).

The memory 20 may be connected to the processor 10 during operation, and may store programs and/or instructions for processing and controlling the processor 10, and may store data and information used in the disclosure, control information required for processing data and information according to the disclosure, and temporary data generated during the data and information processing process. The memory 20 may be implemented as a storage device such as a ROM (Read-Only Memory), a RAM (Random Access Memory), an EPROM (Erasable Programmable Read-Only Memory), an EEPROM (Electrically Erasable Programmable Read-Only Memory), a flash memory, a SRAM Static RAM), an HDD (Hard Disk Drive), an SSD Solid State Drive), and the like.

The processor 10 may be operatively connected to the memory 20 and/or the network interface 30, and may control the operation of respective modules in the apparatus 120. In particular, the processor 10 may perform various control functions for performing the proposed method of the disclosure. The processor 10 may also be called a controller, a micro-controller, a micro-processor, a micro-computer, or the like. The proposed method of the disclosure may be implemented by hardware, firmware, software, or a combination thereof. When implementing the disclosure using hardware, an ASIC (application specific integrated circuit) or a DSP (digital signal processor), a DSPD (digital signal processing device), a PLD (programmable logic device), an FPGA (field programmable gate array), or the like, configured to perform the disclosure, may be provided in the processor 10. Meanwhile, when implementing the proposed method of the disclosure using firmware or software, the firmware or software may include instructions related to modules, procedures, or functions that perform functions or operations necessary for implementing the proposed method of the disclosure, and the instructions may be stored in the memory 20 or stored in a computer-readable recording medium (not shown) separate from the memory 20, and may be configured to cause, when executed by the processor 10, the apparatus 50 to perform the proposed method of the disclosure.

In addition, the apparatus 50 may include a network interface device 30. The network interface device 30 may be connected to the processor 10 during operation, and the processor 10 may control the network interface device 30 to transmit or receive wireless/wired signals carrying information, data, signals, and/or messages through a wireless/wired network. The network interface device 30 may support various communication standards such as IEEE 802 series, 3GPP LTE(-A), 3GPP 5G, etc., and may transmit and receive control information and/or data signals according to the corresponding communication standards. The network interface device 30 may be implemented outside the apparatus 50 as needed.

The embodiments described in this specification and the drawings thereof are merely exemplary and do not limit the scope of the disclosure in any way. In addition, the connections or connection members between the components illustrated in the drawings are examples of functional connections and/or physical or circuit connections, and may be represented as various functional connections, physical connections, or circuit connections that are replaceable or addible in an actual device. In addition, unless specifically stated with "essential," "important," etc., the components may not be essential for the application of the disclosure.

In the specification (especially, in the claims) of the present disclosure, the term "said" and indicative terms similar thereto may be used for both a single element or multiple elements. In addition, if a range is stated in the disclosure, it encompasses embodiments to which respective values within the range are applied (unless otherwise stated), and the respective values constituting the range are regarded as being described in the detailed description of the disclosure. In addition, the steps presented in the method of the disclosure are not intended to be restricted in their sequence, and the sequence thereof may be appropriately changed as needed, unless a certain step must precede according to the nature of the process. All examples or the use of exemplary terms (e.g., etc.) in the disclosure is merely intended to described the disclosure in detail, and the scope of the disclosure is not limited to the examples or exemplary terms, unless limited by the claims.

## Claims

1. A method for performing zero-knowledge proof using a computing apparatus, the method comprising:
configuring (S110), by a signatory (210), a binary tree comprising a second child node (320b, 450b, 550b) produced based on an XOR operation result of a first child node (320a, 450a, 550a, 650a), among child nodes located at level N+1, where, N ≥ 1, with respect to a parent node (410, 510, 610) located at level N, and the parent node (410, 510, 610), based on a secret key which is injected into a root node (310) of the binary tree;
transmitting (S120), by the signatory (210), to a verifier (220), data for verification configured based on a plurality of nodes comprising some leaf nodes (340a - 340h), excluding one or more leaf nodes (340c), among all leaf nodes (340a - 340h) of the binary tree; and
proving (S130) that the signatory (210) possesses the secret key, based on the transmitted data for verification.

2. The method of claim 1,
wherein, in the configuring (S110),
the first child node (320a, 450a, 550a, 650a) is produced by applying a hash function to the parent node (410, 510, 610) and a given first salt value.

3. The method of claim 1,
wherein, in the configuring (S110),
the first child node (320a, 450a, 550a, 650a) is produced by applying a block cipher (630) to the parent node (410, 510, 610).

4. The method of claim 3,
wherein the configuring (S110) comprises:
producing (S111) an XOR operation result, = first operation value, of the parent node (410, 510, 610) and a given 2-1st salt value (620a);
producing (S112) a first output value by applying the block cipher to the first operation value and a given 2-2nd salt value (620b); and
producing (S113) the first child node (320a, 450a, 550a, 650a), based on an XOR operation result, = second operation value, of a second output value of a predetermined first function (630a) for the parent node (410, 510, 610) and the first output value.

5. The method of claim 4,
wherein the first function (630a) is an orthomorphism function having a characteristic in which an output value for a given input value and an XOR operation result of the input value and the output value are permutations.

6. The method of claim 1,
wherein, in the configuring (S110),
the binary tree is a GGM, Goldreich-Goldwasser-Micali, tree.

7. The method of claim 1,
wherein, in the transmitting (S120),
the data for verification is configured for a first leaf node (340c) that is not transmitted, among leaf nodes (340a - 340h) of the binary tree, by including:
another child node, = second leaf node (340d), of a parent node (410, 510, 610), = first parent node (330b), corresponding to the first leaf node (340c); and
another child node, = first branch node (330a), of a parent node (410, 510, 610), = second parent node (320a), corresponding to the first parent node (330b) therein.

8. The method of claim 7,
wherein, in the transmitting (S120),
in a case where a level of the binary tree is 3 or higher,
the data for verification is configured for a second sub-tree to which the first leaf node (340c) does not belong, among sub-trees under the root node (310),
by further including a second branch node (320b) belonging to the second sub-tree, among child nodes of the root node (310), therein.

9. The method of claim 1,
wherein, in the proving (S130),
electronic signature is performed using zero-knowledge proof based on an MPC, Multi-Party Computation-in-the-Head or VOLE, Vector Oblivious Linear Evaluation-in-the-Head technique.

10. An apparatus (50) for performing a zero-knowledge proof, the apparatus (50) comprising:
a processor (10); and
a memory (20),
wherein the memory (20) comprises instructions configured to cause, when executed by the processor (10), the apparatus (50) to implement specific operations, and
wherein the specific operations comprise:
configuring (S110), by a signatory (210), a binary tree comprising a second child node (320b, 450b, 550b) produced based on an XOR operation result of a first child node (320a, 450a, 550a, 650a), among child nodes located at level N+1, where, N ≥ 1, with respect to a parent node located at level N, and the parent node (410, 510, 610), based on a secret key which is injected into a root node (310) of the binary tree;
transmitting (S120), by the signatory (210), to a verifier (220), data for verification configured based on a plurality of nodes comprising some leaf nodes (340a - 340h), excluding one or more leaf nodes (340c), among all leaf nodes (340a - 340h) of the binary tree; and
proving (S130) that the signatory (210) possesses the secret key, based on the transmitted data for verification.

11. The apparatus (50) of claim 10,
wherein, in the configuring (S110),
the first child node (320a, 450a, 550a, 650a) is produced by applying a hash function to the parent node (410, 510, 610) and a given first salt value.

12. The apparatus (50) of claim 10,
wherein the configuring (S110) comprises:
producing (S111) an XOR operation result, = first operation value, of the parent node (410, 510, 610) and a given 2-1st salt value (620a);
producing (S112) a first output value by applying the block cipher to the first operation value and a given 2-2nd salt value (620b); and
producing (S113) the first child node (320a, 450a, 550a, 650a), based on an XOR operation result, = second operation value, of a second output value of a predetermined first function (630a) for the parent node (410, 510, 610) and the first output value.

13. The apparatus of claim 12,
wherein the first function (630a) is an orthomorphism function having a characteristic in which an output value for a given input value and an XOR operation result of the input value and the output value are permutations.

14. A computer-readable storage medium storing instructions configured to cause, when executed by a processor (10), an apparatus (50), comprising the processor (10) and performing zero-knowledge proof, to implement specific operations,
wherein the specific operations comprise:
configuring (S110), by a signatory (210), a binary tree comprising a second child node (320b, 450b, 550b) produced based on an XOR operation result of a first child node (320a, 450a, 550a, 650a), among child nodes located at level N+1, where, N ≥ 1, with respect to a parent node (410, 510, 610) located at level N, and the parent node (410, 510, 610), based on a secret key which is injected into a root node (310) of the binary tree;
transmitting (S120), by the signatory (210), to a verifier (220), data for verification configured based on a plurality of nodes comprising some leaf nodes (340a - 340h), excluding one or more leaf nodes (340c), among all leaf nodes (340a - 340h) of the binary tree; and
proving (S130) that the signatory (210) possesses the secret key, based on the transmitted data for verification.

## Patentansprüche

1. Verfahren zum Durchführen eines Zero-Knowledge-Beweises unter Verwendung eines Berechnungsgerätes, wobei das Verfahren umfasst:
Konfigurieren (S110), durch einen Unterzeichner (210), eines Binärbaums, umfassend einen zweiten Child Node (320b, 450b, 550b), erzeugt auf der Grundlage eines XOR-Operationsergebnisses eines ersten Child Nodes (320a, 450a, 550a, 650a) unter auf der Ebene N+1 befindlichen Child Nodes, wobei N ≥ 1 in Bezug auf einen auf der Ebene N befindlichen Parent Node (410, 510, 610) ist, sowie den Parent Node (410, 510, 610) auf der Grundlage eines geheimen Schlüssels, der in einen Root Node (310) des Binärbaums eingefügt wird;
Senden (S120), durch den Unterzeichner (210), an einen Verifizierer (220) von Daten zur Verifizierung, die auf der Grundlage einer Vielzahl von Nodes erzeugt werden, die einige Leaf Nodes (340a - 340h) umfassen, wobei ein oder mehrere Leaf Nodes (340c) unter sämtlichen Leaf Nodes (340a - 340h) des Binärbaums ausgeschlossen werden; und
Beweisen (S130), dass der Unterzeichner (210) den geheimen Schlüssel besitzt, basierend auf den gesendeten Daten für die Verifizierung.

2. Verfahren nach Anspruch 1,
bei dem beim Konfigurieren (S110)
der erste Child Node (320a, 450a, 550a, 650a) erzeugt wird, indem eine Hash-Funktion auf den Parent Node (410, 510, 610) und einen vorgegebenen ersten Salt-Wert angewendet wird.

3. Verfahren nach Anspruch 1,
bei dem beim Konfigurieren (S110)
der erste Child Node (320a, 450a, 550a, 650a) durch Anwenden einer Blockverschlüsselung (630) auf den Parent Node (410, 510, 610) erzeugt wird.

4. Verfahren nach Anspruch 3,
bei dem das Konfigurieren (S110) umfasst:
Erzeugen (S111) eines XOR-Operationsergebnisses, = erster Operationswert, des Parent Nodes (410, 510, 610) und eines gegebenen 2-1-ten Salt-Wertes (620a);
Erzeugen (S112) eines ersten Ausgabewertes durch Anwenden der Blockverschlüsselung auf den ersten Operationswert und einen vorgegebenen 2-2-ten Salt-Wert (620b); und
Erzeugen (S113) des ersten Child Nodes (320a, 450a, 550a, 650a) auf der Grundlage eines XOR-Operationsergebnisses, = zweiter Operationswert, aus einem zweiten Ausgabewert einer vorbestimmten ersten Funktion (630a) für den Parent Node (410, 510, 610) und den ersten Ausgabewert.

5. Verfahren nach Anspruch 4,
bei dem die erste Funktion (630a) eine Orthomorphismus-Funktion ist, die eine Eigenschaft aufweist, dass ein Ausgabewert für einen gegebenen Eingabewert und ein XOR-Operationsergebnis des Eingabewertes und des Ausgabewertes Permutationen sind.

6. Verfahren nach Anspruch 1,
bei dem beim Konfigurieren (S110)
der Binärbaum ein GGM-, (Goldreich-Goldwasser-Micali-), Baum ist.

7. Verfahren nach Anspruch 1,
bei dem beim Senden (S120)
die Daten zur Verifizierung für einen ersten Leaf Node (340c), der unter den Leaf Nodes (340a - 340h) des Binärbaums nicht gesendet wird, konfiguriert werden, indem eingeschlossen werden:
ein weiterer Child Node, = zweiter Leaf Node (340d), eines Parent Nodes (410, 510, 610), = erster Parent Node (330b), entsprechend dem ersten Leaf Node (340c); sowie ein weiterer Child Node, = erster Branch Node (330a), eines Parent Nodes (410, 510, 610), = zweiter Parent Node (320a), entsprechend dem ersten Parent Node (330b) darin.

8. Verfahren nach Anspruch 7,
bei dem beim Senden (S120),
in einem Fall, in dem eine Ebene des Binärbaums 3 oder höher ist,
die Daten zur Verifizierung für einen unter den Teilbäumen unterhalb des Root Nodes (310) befindlichen zweiten Teilbaum, zu dem der erste Leaf Node (340c) nicht gehört, konfiguriert werden,
indem darin zusätzlich ein unter den Child Nodes des Root Nodes (310) befindlicher zweiter Branch Node (320b) eingeschlossen wird, der zu dem zweiten Teilbaum gehört.

9. Verfahren nach Anspruch 1,
bei dem beim Beweisen (S130)
eine elektronische Signatur unter Verwendung eines Zero-Knowledge-Beweises auf Grundlage einer MPC-, (Multi-Party Computation-in-the-Head-) oder VOLE-, (Vector Oblivious Linear Evaluation-in-the-Head-), Technik durchgeführt wird.

10. Gerät (50) zum Durchführen eines Zero-Knowledge-Beweises, wobei das Gerät (50) umfasst:
einen Prozessor (10); und
einen Speicher (20),
wobei der Speicher (20) Anweisungen umfasst, die dazu eingerichtet sind, bei Ausführung durch den Prozessor (10) das Gerät (50) zu veranlassen bestimmte Operationen auszuführen,
wobei die bestimmten Operationen umfassen:
Konfigurieren (S110), durch einen Unterzeichner (210), eines Binärbaums, umfassend einen zweiten Child Node (320b, 450b, 550b), erzeugt auf der Grundlage eines XOR-Operationsergebnisses eines ersten Child Nodes (320a, 450a, 550a, 650a) unter auf der Ebene N+1 befindlichen Child Nodes, wobei N ≥ 1 in Bezug auf einen auf der Ebene N befindlichen Parent Node (410, 510, 610) ist, sowie den Parent Node (410, 510, 610) auf der Grundlage eines geheimen Schlüssels, der in einen Root Node (310) des Binärbaums eingefügt wird;
Senden (S120), durch den Unterzeichner (210), an einen Verifizierer (220) von Daten zur Verifizierung, die auf der Grundlage einer Vielzahl von Nodes erzeugt werden, die einige Leaf Nodes (340a - 340h) umfassen, wobei ein oder mehrere Leaf Nodes (340c) unter sämtlichen Leaf Nodes (340a - 340h) des Binärbaums ausgeschlossen werden; und
Beweisen (S130), dass der Unterzeichner (210) den geheimen Schlüssel besitzt, basierend auf den gesendeten Daten für die Verifizierung.

11. Gerät (50) nach Anspruch 10,
bei dem beim Konfigurieren (S110)
der erste Child Node (320a, 450a, 550a, 650a) erzeugt wird, indem eine Hash-Funktion auf den Parent Node (410, 510, 610) und einen vorgegebenen ersten Salt-Wert angewendet wird.

12. Gerät (50) nach Anspruch 10,
bei dem das Konfigurieren (S110) umfasst:
Erzeugen (S111) eines XOR-Operationsergebnisses, = erster Operationswert, des Parent Nodes (410, 510, 610) und eines gegebenen 2-1-ten Salt-Wertes (620a);
Erzeugen (S112) eines ersten Ausgabewertes durch Anwenden der Blockverschlüsselung auf den ersten Operationswert und einen vorgegebenen 2-2-ten Salt-Wert (620b); und
Erzeugen (S113) des ersten Child Nodes (320a, 450a, 550a, 650a) auf der Grundlage eines XOR-Operationsergebnisses, = zweiter Operationswert, aus einem zweiten Ausgabewert einer vorbestimmten ersten Funktion (630a) für den Parent Node (410, 510, 610) und den ersten Ausgabewert.

13. Gerät nach Anspruch 12,
bei dem die erste Funktion (630a) eine Orthomorphismus-Funktion ist, die die Eigenschaft aufweist, dass ein Ausgabewert für einen gegebenen Eingabewert und ein XOR-Operationsergebnis aus dem Eingabewert und dem Ausgabewert Permutationen sind.

14. Computerlesbares Speichermedium, auf dem Anweisungen gespeichert sind, die dazu eingerichtet sind, bei Ausführung durch einen Prozessor (10) ein Gerät (50), das den Prozessor (10) umfasst und einen Zero-Knowledge-Beweis durchführt, zu veranlassen, bestimmte Operationen auszuführen,
wobei die bestimmten Operationen umfassen:
Konfigurieren (S110), durch einen Unterzeichner (210), eines Binärbaums, umfassend einen zweiten Child Node (320b, 450b, 550b), erzeugt auf der Grundlage eines XOR-Operationsergebnisses eines ersten Child Nodes (320a, 450a, 550a, 650a) unter auf der Ebene N+1 befindlichen Child Nodes, wobei N ≥ 1 in Bezug auf einen auf der Ebene N befindlichen Parent Node (410, 510, 610) ist, sowie den Parent Node (410, 510, 610) auf der Grundlage eines geheimen Schlüssels, der in einen Root Node (310) des Binärbaums eingefügt wird;
Senden (S120), durch den Unterzeichner (210), an einen Verifizierer (220) von Daten zur Verifizierung, die auf der Grundlage einer Vielzahl von Nodes erzeugt werden, die einige Leaf Nodes (340a - 340h) umfassen, wobei ein oder mehrere Leaf Nodes (340c) unter sämtlichen Leaf Nodes (340a - 340h) des Binärbaums ausgeschlossen werden; und
Beweisen (S130), dass der Unterzeichner (210) den geheimen Schlüssel besitzt, basierend auf den gesendeten Daten für die Verifizierung.

## Revendications

1. Procédé pour effectuer une preuve à divulgation nulle de connaissance au moyen d'un appareil informatique, le procédé comprenant :
la configuration (S110), par un signataire (210), d'un arbre binaire comprenant un second nœud enfant (320b, 450b, 550b) produit sur la base d'un résultat d'opération OU EXCLUSIF d'un premier nœud enfant (320a, 450a, 550a, 650a), parmi des nœuds enfants situés au niveau N+1, où N ≥ 1, par rapport à un nœud parent (410, 510, 610) situé au niveau N, et le nœud parent (410, 510, 610) sur la base d'une clé secrète qui est injectée dans un nœud racine (310) de l'arbre binaire ;
la transmission (S120), par le signataire (210), à un vérificateur (220), de données de vérification configurées sur la base d'une pluralité de nœuds comprenant certains nœuds feuilles (340a-340h), à l'exclusion d'un ou de plusieurs nœuds feuilles (340c), parmi tous les nœuds feuilles (340a-340h) de l'arbre binaire ; et
la démonstration (S130) que le signataire (210) possède la clé secrète, sur la base des données de vérification transmises.

2. Procédé selon la revendication 1,
dans lequel, lors de la configuration (S110),
le premier nœud enfant (320a, 450a, 550a, 650a) est produit en appliquant une fonction de hachage au nœud parent (410, 510, 610) et une première valeur de cryptage donnée.

3. Procédé selon la revendication 1,
dans lequel, lors de la configuration (S110),
le premier nœud enfant (320a, 450a, 550a, 650a) est produit en appliquant un chiffrement par bloc (630) au nœud parent (410, 510, 610).

4. Procédé selon la revendication 3,
dans lequel la configuration (S110) comprend :
la production (S111) d'un résultat d'opération OU EXCLUSIF, = première valeur d'opération, du nœud parent (410, 510, 610) et d'une 2-1^{ère} valeur de cryptage donnée (620a) ;
la production (S112) d'une première valeur de sortie en appliquant le chiffrement par bloc à la première valeur d'opération et une 2-2^{nde} valeur de cryptage donnée (620b) ; et
la production (S113) du premier nœud enfant (320a, 450a, 550a, 650a), sur la base d'un résultat d'opération OU EXCLUSIF, = seconde valeur d'opération, d'une seconde valeur de sortie d'une première fonction prédéterminée (630a) pour le nœud parent (410, 510, 610) et de la première valeur de sortie.

5. Procédé selon la revendication 4,
dans lequel la première fonction (630a) est une fonction d'orthomorphisme présentant une caractéristique selon laquelle une valeur de sortie pour une valeur d'entrée donnée et un résultat d'opération OU EXCLUSIF de la valeur d'entrée et de la valeur de sortie sont des permutations.

6. Procédé selon la revendication 1,
dans lequel, lors de la configuration (S110),
l'arbre binaire est un arbre GGM, Goldreich-Goldwasser-Micali.

7. Procédé selon la revendication 1,
dans lequel, lors de la transmission (S120),
les données de vérification sont configurées, pour un premier nœud feuille (340c) qui n'est pas transmis parmi les nœuds feuilles (340a-340h) de l'arbre binaire, en incorporant :
un autre nœud enfant, = second nœud feuille (340d), d'un nœud parent (410, 510, 610), = premier nœud parent (330b), correspondant au premier nœud feuille (340c) ; et
un autre nœud enfant, = premier nœud de branche (330a), d'un nœud parent (410, 510, 610), = second nœud parent (320a), correspondant au premier nœud parent (330b), à l'intérieur.

8. Procédé selon la revendication 7,
dans lequel, lors de la transmission (S120),
dans un cas où un niveau de l'arbre binaire est de 3 ou plus,
les données de vérification sont configurées pour un second sous-arbre auquel le premier nœud feuille (340c) n'appartient pas, parmi des sous-arbres situés sous le nœud racine (310),
en incorporant en outre un second nœud de branche (320b) appartenant au second sous-arbre, parmi des nœuds enfants du nœud racine (310), à l'intérieur.

9. Procédé selon la revendication 1,
dans lequel, lors de la démonstration (S130),
une signature électronique est effectuée au moyen d'une preuve à divulgation nulle de connaissance sur la base d'une technique MPC, calcul multipartite sécurisé, in-the-Head ou VOLE, évaluation linéaire vectorielle ignorante, in-the-Head.

10. Appareil (50) pour effectuer une preuve à divulgation nulle de connaissance, l'appareil (50) comprenant :
un processeur (10) ; et
une mémoire (20),
dans lequel la mémoire (20) comprend des instructions configurées pour amener, lorsqu'elles sont exécutées par le processeur (10), l'appareil (50) à mettre en œuvre des opérations spécifiques, et
dans lequel les opérations spécifiques comprennent :
la configuration (S110), par un signataire (210), d'un arbre binaire comprenant un second nœud enfant (320b, 450b, 550b) produit sur la base d'un résultat d'opération OU EXCLUSIF d'un premier nœud enfant (320a, 450a, 550a, 650a), parmi des nœuds enfants situés au niveau N+1, où N ≥ 1, par rapport à un nœud parent situé au niveau N, et le nœud parent (410, 510, 610) sur la base d'une clé secrète qui est injectée dans un nœud racine (310) de l'arbre binaire ;
la transmission (S120), par le signataire (210), à un vérificateur (220), de données de vérification configurées sur la base d'une pluralité de nœuds comprenant certains nœuds feuilles (340a-340h), à l'exclusion d'un ou de plusieurs nœuds feuilles (340c), parmi tous les nœuds feuilles (340a-340h) de l'arbre binaire ; et
la démonstration (S130) que le signataire (210) possède la clé secrète, sur la base des données de vérification transmises.

11. Appareil (50) selon la revendication 10,
dans lequel, lors de la configuration (S110),
le premier nœud enfant (320a, 450a, 550a, 650a) est produit en appliquant une fonction de hachage au nœud parent (410, 510, 610) et une première valeur de cryptage donnée.

12. Appareil (50) selon la revendication 10,
dans lequel la configuration (S110) comprend :
la production (S111) d'un résultat d'opération OU EXCLUSIF, = première valeur d'opération, du nœud parent (410, 510, 610) et d'une 2-1^{ère} valeur de cryptage donnée (620a) ;
la production (S112) d'une première valeur de sortie en appliquant le chiffrement par bloc à la première valeur d'opération et une 2-2^{nde} valeur de cryptage donnée (620b) ; et
la production (S113) du premier nœud enfant (320a, 450a, 550a, 650a), sur la base d'un résultat d'opération OU EXCLUSIF, = seconde valeur d'opération, d'une seconde valeur de sortie d'une première fonction prédéterminée (630a) pour le nœud parent (410, 510, 610) et de la première valeur de sortie.

13. Dispositif selon la revendication 12,
dans lequel la première fonction (630a) est une fonction d'orthomorphisme présentant une caractéristique selon laquelle une valeur de sortie pour une valeur d'entrée donnée et un résultat d'opération OU EXCLUSIF de la valeur d'entrée et de la valeur de sortie sont des permutations.

14. Support de stockage lisible par ordinateur stockant des instructions configurées pour amener, lorsqu'elles sont exécutées par un processeur (10), un appareil (50), comprenant le processeur (10) et effectuant une preuve à divulgation nulle de connaissance, à mettre en œuvre des opérations spécifiques,
dans lequel les opérations spécifiques comprennent :
la configuration (S110), par un signataire (210), d'un arbre binaire comprenant un second nœud enfant (320b, 450b, 550b) produit sur la base d'un résultat d'opération OU EXCLUSIF d'un premier nœud enfant (320a, 450a, 550a, 650a), parmi des nœuds enfants situés au niveau N+1, où N ≥ 1, par rapport à un nœud parent (410, 510, 610) situé au niveau N, et le nœud parent (410, 510, 610) sur la base d'une clé secrète qui est injectée dans un nœud racine (310) de l'arbre binaire ;
la transmission (S120), par le signataire (210), à un vérificateur (220), de données de vérification configurées sur la base d'une pluralité de nœuds comprenant certains nœuds feuilles (340a-340h), à l'exclusion d'un ou de plusieurs nœuds feuilles (340c), parmi tous les nœuds feuilles (340a-340h) de l'arbre binaire ; et
la démonstration (S130) que le signataire (210) possède la clé secrète, sur la base des données de vérification transmises.
